# EUROPEAN PATENT SPECIFICATION

(11) **EP 4 639 887 B1**
(45) Date of publication and mention of the grant of the patent: **09.12.2026**
(21) Application number: 23833536.8
(22) Date of filing: 24.12.2023
(51) Int. Cl.: H04N 13/324, H04N 13/31, H04N 13/305

(54) **METHOD FOR DISPLAYING A FIRST CONTENT AND A SECOND CONTENT ON AN AUTOSTEREOSCOPIC DISPLAY DEVICE**
VERFAHREN ZUR ANZEIGE EINES ERSTEN INHALTS UND EINES ZWEITEN INHALTS AUF EINER AUTOSTEREOSKOPISCHEN ANZEIGEVORRICHTUNG
PROCÉDÉ D'AFFICHAGE D'UN PREMIER CONTENU ET D'UN SECOND CONTENU SUR UN DISPOSITIF D'AFFICHAGE AUTO-STÉRÉOSCOPIQUE

(30) Priority: 24.12.2022 NL 2033835
(43) Date of publication of application: 29.10.2025
(73) Proprietor: Dimenco Holding B.V., 5503 LM Veldhoven (NL)
(72) Inventor: CAARLS, Jurjen, 5503 LM Veldhoven (NL); PEETERS, Patrick Godefridus Jacobus Maria, 5503 LM Veldhoven (NL)
(74) Representative: Carpmaels & Ransford LLP
(86) International application number: PCT/NL2023/050688
(87) International publication number: WO 2024/136661

(56) References cited:
- EP-A1- 2 490 451
- EP-A1- 3 687 168
- US-A1- 2008 049 048
- US-A1- 2021 136 353

## Description

### FIELD OF THE INVENTION

The invention relates to a method for displaying a first content and a second content on a display device that is capable of directing the first content and the second content in mutually different spatial directions. The invention further relates to a display device configured to perform such method.

### BACKGROUND

Autostereoscopic displays play an increasingly important role in virtual reality and augmented reality applications. One of their most outstanding features is that they allow a viewer to perceive three-dimensional images without a dedicated eyewear device or other wearables, also when the viewer moves relative to the display.

Key to this technology is the presence of a screen that comprises a lenticular lens or parallax barrier placed in front of an array of pixels. Each pixel in such array is composed of a number of sub-pixels in different colors (typically red, green and blue). Due to the lenticular lens or parallax barrier, (sub-)pixel output (*i.e.* light) can be directed to particular spatial directions, which allows selective illumination of only one eye of a pair of eyes. By accurately controlling the sub-pixels individually, possibly with the aid of real-time obtained eye position data, the screen can direct simultaneously a left eye image to a left eye of the viewer and a right eye image to a right eye of the viewer. The resulting stereoscopic image provides a depth perception wherein elements in the image may appear in front of the display or further away than the display ('behind' the display).

It is to be noted that, in practice, there is always a (very) small portion of light that 'leaks' to the other eye, which effect is known as crosstalk. Viewers may however not always be aware of this and still rate their three-dimensional viewing experience as satisfying.

Instead of directing different content to each eye of a single viewer for the purpose of stereoscopy, it is also possible to direct the different content to different persons, so that a first person sees a first content and a second person sees a second content that is different from the first content. This purpose is known as multi-viewer displaying and can usually also be implemented on the autostereoscopic displays described hereabove.

A lenticular lens comprises an array of semi-cylindrical micro-lenses (lenticulars). Depending on the exact position of a sub-pixel relative to the lenticulars, light is outputted in a particular direction (e.g. in a direction where happens to be a right eye or a left eye). A parallax barrier is an opaque layer with a series of precisely spaced slits. Since different sub-pixels have different positions relative to the slits, each eye sees a different set of pixels. It will thus be evident that sub-pixel position relative to the lenticulars or relative to the slits, respectively, is crucial for building up a high-quality stereoscopic image.

Manufacturers and developers of autostereoscopic displays usually apply pixel arrays that are generally commercially available rather than designing and producing them in-house. The pixel arrays available to them are traditionally characterized by highly regular arrangements of the sub-pixels. For example, they have rows with a repeating sequence of equally spaced red, green and blue sub-pixels, wherein the different rows are regularly stacked. Sub-pixel position is the same in each pixel and follows a rather simple formula, as the centers of gravity of neighboring sub-pixels are spaced with 1/3 of the pixel size in the direction of the row. This makes programming for the autostereoscopic display straightforward.

Any such conventional programmed methods do however not translate well to many pixel arrays that have entered the market more recently, as these tend to have less regular sub-pixel arrangements than the highly regular arrangements for which the conventional methods were originally designed. For example, they tend to have different pixels that do not have the same sub-pixel lay-out. Also, the different pixels are often arranged in a complex pattern. When conventional methods to determine sub-pixel position are applied to such pixel arrays, then the deviation of a true sub-pixel position from an assumed sub-pixel position leads to erroneous image display, in particular to crosstalk and to color effects.

This applies in particular to red-green-blue OLED pixel arrays, which are often manufactured with a bigger blue sub-pixel that is sometimes split into multiple sub-sub-pixels. The blue sub-pixels often exist in multiple different shapes (typically two, three or four different shapes) and do not hold the same position relative to the other sub-pixels in every pixel. Usually, a particular cluster of such pixels (rather than one pixel alone) forms a repeating unit within the pixel grid.

With non-uniform sub-pixel arrangements, as present in e.g. OLED pixel arrays, it is more difficult to determine whether a particular sub-pixel output hits a left eye or a right eye. An exact position of a sub-pixel can be picked up from a look-up table encompassing the entire array, but given the large size of such table, this would give problems with memory access.

Manufacturers and developers of autostereoscopic displays tend to use different types of pixel arrays within their manufacturing and development environment, respectively. They therefore need to program their autostereoscopic displays for each specific type of pixel arrangement in a different way (as the pixel position with respect to the lenticulars varies from one type of pixel arrangement to another). It requires much time and manpower to adapt the software for each newly obtained pixel arrangement. Current methods, for example those wherein the problem is solved analytically (mathematically), have the disadvantage that such adaptation cannot easily be made.

It is thus necessary to find a way to cope with a non-uniform sub-pixel lay-out in a pixel arrangement. To date, however, no satisfactory solution has been found to do so.

EP 3 687 168 A1 describes a processor system and computer-implemented method for assigning view numbers to display elements of an autostereoscopic display for use in interleaving image data of different viewpoints of a scene on the basis of said assigned view numbers. The assignment may be adapted to different optical designs of such autostereoscopic displays, for example, in terms of pitch and/or slant of the optical elements used in such autostereoscopic displays, or to different sub-pixel layouts of the display panel.

US 2008/049048 A1 describes a display device which comprises a display panel comprising high brightness subpixel repeating groups-for example, RGBW display panels. Displays comprise subpixel repeating groups that include first and second primary color stripes and third and fourth primary color subpixels that are disposed on a checkerboard pattern. A subpixel rendering operation includes, or is followed by, a white subpixel adjustment operation that adjusts the brightness of the white subpixels in the areas of the displayed image that contain high spatial frequency features such as lines and text, in order to improve image quality such as image contrast.

### SUMMARY OF THE INVENTION

It is therefore an object of the present invention to provide a method for displaying a first content and a second content on a display device, wherein the method comprises an improved procedure for determining sub-pixel position in a pixel grid wherein different pixels do not have a uniform sub-pixel lay-out.

It is also an object that such displaying method comprises a general procedure for determining sub-pixel position in a pixel grid, so that the software of an autostereoscopic display device can easily be adapted to a panel with a different pixel arrangement, and that it becomes easier to build a working autostereoscopic display device with a different panel. It has now been found that one or more of these objects can be reached by performing a particular method for each sub-pixel in the pixel grid. Accordingly, the present invention relates to a method for displaying a first content and a second content on a display device that is capable of directing the first content and the second content in mutually different spatial directions, the method comprising the steps of
a) providing the display device, wherein the display device comprises a panel for simultaneously directing the first content and the second content in mutually different spatial directions by means of a view-forming arrangement,
   - wherein the panel comprises a pixel arrangement that is composed of a plurality of pixels that are capable of producing a pixel output, the panel comprising the view-forming arrangement wherein the view-forming arrangement is provided over the pixel arrangement;
   - wherein the pixels are composed of a plurality of sub-pixels that are capable of producing a sub-pixel output; and
   - wherein the pixel arrangement comprises at least a first pixel type having a first sub-pixel lay-out;
b) providing the first content and the second content;
c) providing the mutually different spatial directions to which the first content and the second content have to be directed;
d) defining a stamp, the stamp being a repeating unit in the pixel arrangement, comprising at least one or more pixels of the first pixel type;
   wherein a plurality of the stamps are arranged in a stamp grid overlaying the pixel arrangement, in a direction along rows of the stamp grid and a direction along columns of the stamp grid;
e) setting one particular sub-pixel in the stamp as an origin of the stamp, to define a stamp origin;
f) setting one particular sub-pixel in the pixel arrangement as an origin of the pixel arrangement, to define a pixel arrangement origin;
g) identifying a target sub-pixel of which the position in the pixel arrangement needs to be determined;
h) determining the stamp to which the target sub-pixel belongs, to define such stamp as a target stamp;
i) determining a target stamp offset for the stamp origin of the target stamp relative to the pixel arrangement origin;
j) determining a sub-pixel offset for the target sub-pixel relative to the stamp origin of the target stamp, using a look-up table that is drawn up for the stamp and that contains the relative positions of all sub-pixels of the stamp relative to the stamp origin;
k) determining a total sub-pixel offset for the target sub-pixel relative to the pixel arrangement origin by adding the sub-pixel offset to the target stamp offset;
l) determining for the target sub-pixel whether it produces sub-pixel output for the first content, for the second content, or for none of both contents, taking into account
   - the view-forming arrangement;
   - the mutually different spatial directions as provided under c);
   - the total sub-pixel offset of the target sub-pixel as determined under k);
m) controlling the target sub-pixel accordingly.

The invention further relates to a display device for simultaneously displaying a first content and a second content, wherein the first content and the second content are directed in mutually different spatial directions, the display comprising
- a panel comprising
   ∘ a pixel arrangement that is composed of a plurality of pixels that are capable of producing a pixel output,
   ∘ a view-forming arrangement for directing the first content and the second content in mutually different spatial directions, wherein the view-forming arrangement is provided over the pixel arrangement;
   wherein the pixels are composed of a plurality of sub-pixels that are capable of producing a sub-pixel output, and wherein the pixel arrangement comprises at least
   ∘ a first pixel type having a first sub-pixel lay-out; and
   ∘ optionally a second pixel type having a second sub-pixel lay-out that is different from the first sub-pixel lay-out;
- a processor and a memory, wherein the memory comprises computer-executable code that, when executed by the processor, causes the processor to perform the method as described above.

### BRIEF DESCRIPTION OF THE DRAWINGS

Figure 1 schematically displays four stamps that are defined according to the method of the invention, comprising only one pixel type.
Figure 2 schematically displays one stamp that is defined according to the method of the invention, comprising two different pixel types.
Figure 3 schematically displays a pixel arrangement (1) composed of the two different pixel types according to Figure 2.

### DETAILED DESCRIPTION OF THE INVENTION

The figures do not limit the present invention to the specific embodiments disclosed therein and described in the present description. Elements in the figures are illustrated for simplicity and clarity and have not necessarily been drawn to scale, emphasis instead being placed upon clearly illustrating the principles of the invention.

Further, the terms "first", "second", and the like in the present description and claims, if any, are generally used for distinguishing between similar elements and not necessarily for describing a sequential or chronological order.

In the context of the invention, by the term "autostereoscopic display device" is meant a device capable of simultaneously displaying at least a first content and a second content to mutually different viewing positions. To this end, the first and second content are directed in mutually different spatial directions. Together, both contents may form a stereoscopic pair to allow a viewer to view a stereoscopic content. Alternatively, an autostereoscopic display device may also display the first content and the second content to two different persons, allowing each of them to view a monoscopic content. In case the autostereoscopic display device is capable of also displaying a third content and a fourth content simultaneously, then the two different persons may each view a different stereoscopic content. Such a situation wherein two or more different persons each receive their own view (or views) from the autostereoscopic display device, is known as multi-viewer displaying.

In the context of the invention, by the term "center of gravity" of a sub-pixel with a particular pixel shape is meant the point upon which the shape, cut from a uniform plane having a uniformly distributed mass, would be perfectly balanced on the tip of a pin - analogous to a centroid of a geometrical form.

In a method of the invention a pixel is preferably represented by its center of gravity, in particular for the purpose of determining a target stamp offset, a sub-pixel offset and a total sub-pixel offset.

In particular cases, the center of gravity of a sub-pixel corresponds to a point that does not emit light. This may be the case when the sub-pixel shape has a high curvature and/or a large indent; or when the pixel is composed of multiple discontinuous light emitting spots (*i.e.* it then comprises multiple sub-sub-pixels).

In the context of the invention, the term "content" is meant to include videos, pictures, still images, motion pictures, graphical user interfaces, graphical objects, animations, television broadcasts, live feeds, or any other content that is broadcast over the internet or other networks or that is stored on a storage medium for playback.

The method according to the present invention is performed for a display device that is capable of simultaneously directing the first content and the second content in mutually different spatial directions. Such display device is usually an autostereoscopic display device. Often, such device is also capable of acting as a multi-viewer display device, wherein it displays the first content and the second content to two different viewers.

The display device comprises a panel for directing the first content and the second content in mutually different spatial directions. This panel comprises a pixel arrangement that is composed of a plurality of pixels that are capable of producing a pixel output; and it comprises a view-forming arrangement that is provided over the pixel arrangement.

The view-forming arrangement generally has a fixed connection with the pixel arrangement (*i.e.* both cannot move relative to one another), and is designed to direct pixel output from different pixels in the pixel arrangement to mutually different spatial directions within a field of view of the autostereoscopic display device. This allows to display the first content (e.g. a left eye image or an image for a first viewer) at a first viewing position and the second content (*e.g*. a right eye image or an image for a second viewer, respectively) at a second viewing position that is different from the first viewing position.

The view-forming arrangement typically comprises a lenticular lens or a parallax barrier. Lenticular elements of a lenticular lens and elongated slits of a parallax barrier are capable of directing pixel output from different pixels in mutually different spatial directions. There may also be other types of view-forming arrangements that are capable of this, for example a technology known as 'directional backlight'.

A display device of the invention generally comprises a weaver for assigning pixels of the first content and pixels of the second content to the pixels of the autostereoscopic display device, so that these pixels direct their pixel output to their respective direction - a first direction (*e.g*. a left eye of a viewer) or a second direction (e.g. a right eye of a viewer). In the field of autostereoscopic displays, weaving is a well-known concept for generating output content by the autostereoscopic display on the basis of input content data. In prior art of the field, terms that are considered equivalent to weaving are "interleaving", "interlacing" and "interdigitating".

In step a) of the method, a display device as described hereabove is provided.

In step b) of the method, the first content and the second content are provided.

In step c) of the method, the mutually different spatial directions to which the first content and the second content have to be directed are provided. These directions are typically derived from the viewing position that is taken by one or more viewers of the device. To this end, the position of the one or more viewers may be tracked by a viewer tracking system, in particular by an eye tracking system.

In steps d) - k) of the method, the position of a particular selected sub-pixel in the pixel arrangement is determined, which sub-pixel is for this purpose named 'target sub-pixel'. Before the actual selection of the target sub-pixel in step g), three general steps are performed in steps d) - f); a stamp is defined within the pixel arrangement in step d), an origin of the stamp is set in step e), and an origin of the pixel arrangement is set in step f). Then, in steps g) - k), the target sub-pixel is selected and its position in the pixel arrangement is obtained (or, more precisely, its offset relative to the pixel arrangement origin).

Steps d) - k) of the method of the invention will be elaborated in more detail below.

Steps I) and m) are concerned with using the determined target sub-pixel position in the pixel arrangement for a proper control of the target sub-pixel that was identified in step g). First, in step I) it is determined for the target sub-pixel whether it produces sub-pixel output for the first content or for the second content. This requires not only the determined target sub-pixel position, but also the properties of the view-forming arrangement and the actual directions to which the first content and the second content have to be directed. Now that step I) has provided for which of both contents the target sub-pixel produces sub-pixel output, the target sub-pixel can be controlled in accordance with this, e.g. by assigning a particular (sub-)pixel of the respective content to the target sub-pixel (weaving).

The panel of a display device that is used in a method according to the present invention comprises a plurality of pixels, which pixels are arranged in a particular pixel arrangement on the panel. This may in principle concern any type of pixel arrangement wherein one pixel or a group of pixels form a unit in the pixel arrangement that repeats itself a number of times in the pixel arrangement. Application of the method of the invention is not limited to a particular use of the pixel arrangement. Preferably, however, the pixel arrangement is used for an autostereoscopic display device, given the importance therein of (sub-)pixel position relative to lenticular elements or a parallax barrier.

For the purpose of the invention, such repeating unit in a pixel arrangement is termed a 'stamp'. A plurality of the stamps are arranged in a stamp grid that overlays the pixel arrangement, in a direction along rows of the stamp grid and a direction along columns of the stamp grid. The repetition of stamps occurs to the extent that all pixels in the pixel arrangement are assigned to a particular stamp, which may in some cases lead to a part of a repeating unit that exceeds a border of the pixel arrangement. Other aspects of a stamp as will be further described below.

Each pixel in the pixel arrangement is composed of a plurality of sub-pixels, which are individually addressable color components (spots capable of emitting light) that together allow the pixel to which they belong to produce a certain color. Sub-pixels are usually capable of emitting red, green or blue light, which is provided in response to image data received by the sub-pixel, by altering emission, reflectance, and/or transmission of light in the sub-pixel. Although less common, there are also panels having (amongst others) pixels that are capable of emitting white light.

Sub-pixels are grouped together in a certain sub-pixel lay-out to define a pixel. In an arrangement of a method of the invention, different pixels with a different sub-pixel lay-out are present. The pixel arrangement comprises at least a first pixel type having a first sub-pixel lay-out; and a second pixel type having a second sub-pixel lay-out that is different from the first sub-pixel lay-out. A stamp in a method of the invention comprises one or more pixels of the first pixel type and one or more pixels of the second pixel type.

According to the method of the invention, a stamp is defined for the pixel arrangement. A stamp is in principle a smallest repeating unit in the pixel arrangement, but this not a requirement. A stamp may also be composed of a plurality of smallest repeating units in the pixel arrangement. The stamp may even comprise the entire pixel arrangement.

Once a stamp has been defined, there is one particular sub-pixel in a stamp that forms the origin of the stamp, which is termed the 'stamp origin'. This stamp origin is set in the method of the invention. Which sub-pixel is actually chosen as the stamp origin is not important. The stamp origin serves as a reference point for all other sub-pixel positions in a stamp, so that it is possible to define their relative positions within a stamp (which are expressed as offsets relative to the stamp origin in the method of the invention).

Analogously, there is one particular sub-pixel in the pixel arrangement that forms the origin of the pixel arrangement, which is termed the 'pixel arrangement origin'. This pixel arrangement origin is set in the method of the invention and serves as a reference point relative to which the offsets of all other sub-pixels are determined according to the method of the invention. Which sub-pixel is actually chosen as the pixel arrangement origin is therefore not important.

The offsets in a method of the invention may in principle be expressed in any unit of length. This is often in pixels, as is the case in the below examples. The offset may however also be provided in another unit of length, such as meter. It is acknowledged that performing a conversion between different units of length is trivial to the person skilled in the art.

In principle, the stamp origin and the pixel arrangement origin may be chosen independently of one another. This means that they may represent different colors and/or have different positions within a stamp that is defined for the pixel arrangement. Preferably, however, the pixel arrangement origin has the same position within a stamp as the stamp origin (and thus also the same color). This makes application of the method of the invention simpler than when a different color or position has to be compensated for. Therefore, in a method of the invention, the sub-pixel that is set as the pixel arrangement origin in step d) preferably coincides with the sub-pixel that is set as the stamp origin of the stamp in step c).

Now that a stamp, a stamp origin and a pixel arrangement origin have been defined for a panel with a particular pixel arrangement in steps d) - f), a sequence of steps g) - k) will be carried out for each sub-pixel in the pixel arrangement in order to determine the position of each sub-pixel relative to the pixel arrangement origin.

The first step g) is the identification of the sub-pixel for which the position is to be determined. This sub-pixel is termed 'target sub-pixel'.

In a next step h), the stamp to which the target sub-pixel belongs is determined. This stamp is termed 'target stamp'.

In a next step i), an offset is determined for the stamp origin of the target stamp relative to the pixel arrangement origin. This offset is termed 'target stamp offset'.

In a next step j), an offset is determined for the target sub-pixel relative to the stamp origin of the target stamp to which the target sub-pixel belongs. This offset is termed 'sub-pixel offset'. This determination is performed by using a look-up table that is drawn up for the stamp and that contains the relative positions of all sub-pixels of the stamp relative to the stamp origin. These relative positions are known, or can be derived, from the specifications of the panel. Alternatively, they may be obtained by measuring them, for example from a picture of the pixel arrangement made with microscope.

In a next step k), the determined sub-pixel offset and target stamp offset are then used to determine an offset for the target sub-pixel relative to the pixel arrangement origin. This offset is termed 'total sub-pixel offset'. The determination thereof is performed by adding the sub-pixel offset to the target stamp offset. From the obtained total sub-pixel offset, the position of the target sub-pixel in the pixel arrangement can be derived.

As already indicated above, steps I) and m) use the determined target sub-pixel position for a true action in the display device, namely controlling of the target sub-pixel.

During normal operation of the display device, the sequence of steps g) - m) is generally performed for all sub-pixels of which the position in the pixel arrangement is required - this concerns typically all sub-pixels in the pixel arrangement. Therefore, a method of the invention is followed by repeating steps g) up to and including m) a plurality of times, each time for a different target sub-pixel. The number of repetitions typically equals the number of sub-pixels of the panel, which may be more than 100,000, more than 1,000,000 or more than 10,000,000 times. For example, for a panel with a resolution of e.g. 1,920 x 1,080 pixels, the steps g) - m) need to be repeated some 6,220,799 times.

A method of the invention with the above repetition of the steps g) - m) is typically performed for the build-up of a single frame on the panel of an autostereoscopic display device. For the build-up of a next frame, the method of the invention is repeated in its entirety. The frequency at which the method is then performed is typically the frequency of a refresh rate of the panel, or a frequency close thereto. For example, the method is repeated at a frequency of at least 50 times per second, preferably at a frequency in the range of 55-150 times per second. The frequency may however also be (much) lower, as would be the case for e.g. a photo frame.

Whereas the stamps are arranged in a grid, in a direction along rows and a direction along columns, this is not necessarily the case for the pixels. For example, pixels may be arranged along a row but not along a column. Usually, however, the pixels in the pixel arrangement are arranged in a grid, in a direction along rows and a direction along columns.

The panel with the pixel arrangement may be an OLED panel. This means that the sub-pixels are OLED sub-pixels, *i.e.* sub-pixels that have an organic light-emitting diode as a light source.

The method of the invention may in principle be applied to any pixel arrangement comprising individually addressable sub-pixels. The pixel arrangement comprises at least a first pixel type having a first sub-pixel lay-out.

The method of the invention is especially advantageous, however, when the sub-pixels have a more irregular sub-pixel arrangement. This is the case when a stamp comprises a plurality of different sub-pixel lay-outs, for example two, three, four or five different sub-pixel lay-outs. Accordingly, the pixel arrangement may comprise a second pixel type having a second sub-pixel lay-out that is different from the first sub-pixel lay-out; and wherein the stamp further comprises one or more pixels of the second pixel type. The pixel arrangement may further also comprise a third pixel type having a third sub-pixel lay-out that is different from the first sub-pixel lay-out and different from the second sub-pixel lay-out; and wherein the stamp further comprises one or more pixels of the third pixel type. The pixel arrangement may further also comprise a fourth pixel type having a fourth sub-pixel lay-out that is different from the first sub-pixel lay-out, different from the second sub-pixel lay-out, and different from the third sub-pixel lay-out; and wherein the stamp further comprises one or more pixels of the fourth pixel type.

Irregular sub-pixel arrangements are in particular found in OLED pixel arrangements, as these are often manufactured with a blue sub-pixel that is bigger than the red and green sub-pixel. In a particular embodiment, a blue sub-pixel (of an OLED type or of a non-OLED type) is split into multiple sub-sub-pixels, wherein these multiple sub-sub-pixels are only addressable as a whole, and not individually. Accordingly, in an embodiment, the blue sub-pixel comprises multiple discontinuous light emitting spots (or multiple sub-sub-pixels).

The method may advantageously be performed on regular pixel arrangements such as the red-green-blue types wherein neighboring sub-pixels are spaced with 1/3 of the pixel size along a pixel row. For this type of pixel arrangements, suitable conventional methods exist. The invention now provides a useful alternative for these methods.

For more irregular pixel arrangements, which are becoming more common on the market, no satisfying solution is available in the art, but the invention now provides an effective solution that is easy to implement.

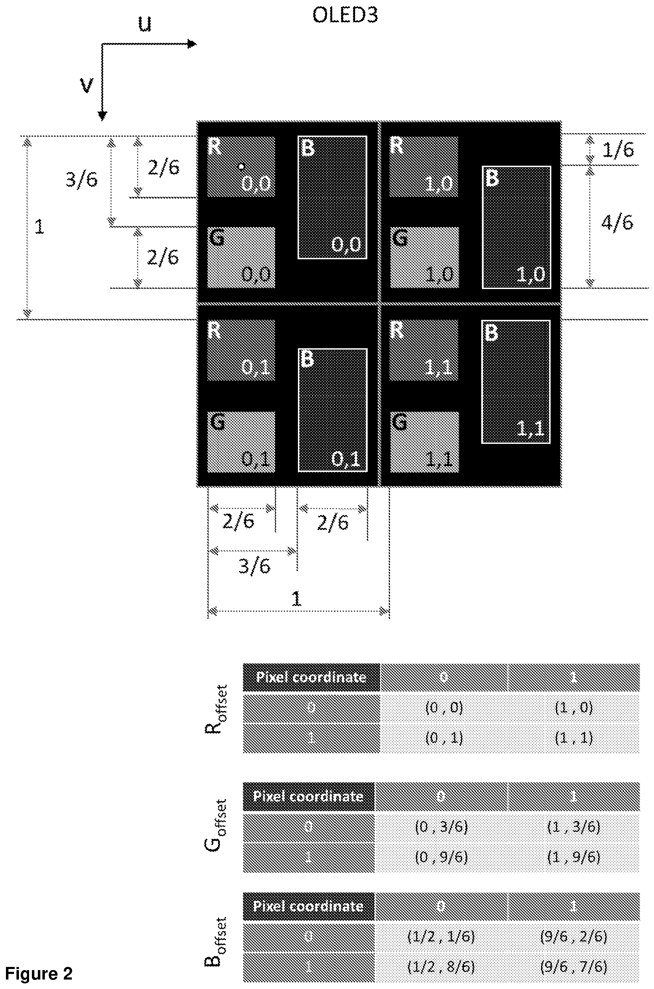

Another important advantage of the method of the invention lies in its generality. The regular pixel arrangements form one end of the spectrum of pixel arrangements that can be processed by the method of the invention. On another end of the spectrum are more irregular pixel arrangements, having two or more different types of sub-pixel lay-out. An even higher irregularity is reached when each type of sub-pixel lay-out occurs at least twice in a stamp (as in the stamp shown in Figure 2).

As such a wide variety of display design can be processed by the method of the invention, a manufacturer or developer of (autostereoscopic) displays may switch between panels with different pixel arrangements without attracting a lot of extra work such as extra programming work. For example, for programming a weaver of stereoscopic images in an autostereoscopic display, the stamp with the sub-pixel offsets therein are simply provided as a weaving parameter to the weaver, amongst other parameters that are conventionally also provided, such as lenticular slant, lenticular pitch and lens/glass thickness. It is then not necessary to implement a complete new pixel lay-out in the weaver. Thus, it is an advantage of the method of the invention that it is generally applicable to wide range of pixel arrangements.

The invention further relates to an autostereoscopic display device comprising
- a panel comprising a pixel arrangement that is composed of a plurality of pixels, wherein the pixels are composed of a plurality of sub-pixels, and wherein the pixel arrangement comprises at least
   ∘ a first pixel type having a first sub-pixel lay-out; and
   ∘ a second pixel type having a second sub-pixel lay-out that is different from the first sub-pixel lay-out;
wherein the autostereoscopic display device is configured to perform the method for displaying a first content and a second content as described above.

In an embodiment, the autostereoscopic display device comprises a processor and a memory, wherein the memory comprises computer-executable code that, when executed by the processor, causes the processor to perform the method for displaying a first content and a second content as described above.

The invention further relates to a computer readable medium comprising transitory or non-transitory data representing instructions to cause the processor of the display device to perform the method for displaying a first content and a second content as described above.

The invention further relates to software arranged to perform the method for determining a position of a sub-pixel in a pixel arrangement as described above, when executed on the processor of the display device.

### EXAMPLES

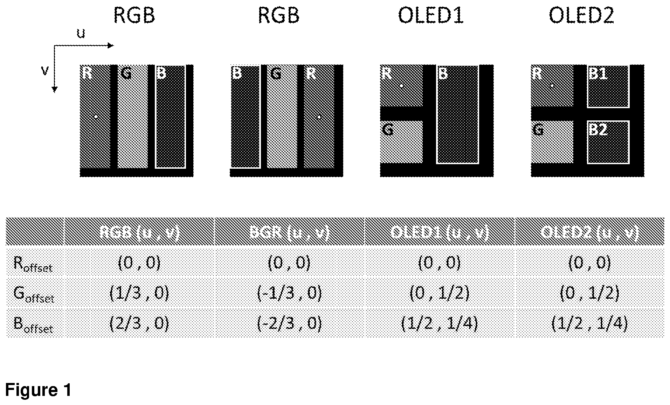

A couple of possible sub-pixels lay-outs are drawn to illustrate the method of the invention. Figure 1 displays four stamps that are composed of only one pixel and therefore comprise only one pixel type. The only red sub-pixel in each stamp forms the stamp origin, which is represented by a dot at the center of the red sub-pixel (the pixel's center of gravity). The two stamps on the left are common red-green-blue and blue-green-red stamps, identified as 'RGB' and 'BGR', respectively. Herein, neighboring sub-pixels are spaced with 1/3 of the pixel size in the u-direction. The two stamps on the right are stamps with a bigger blue sub-pixel, as is typical for an OLED panel. These are identified as 'OLED1' and 'OLED2'. In the most right stamp (OLED2), the blue sub-pixel is divided into two blue sub-sub-pixels that are not individually addressable. The table below the stamps provides for each stamp the offset for the red sub-pixel (R_{offset}), the green sub-pixel (G_{offset}), and the blue sub-pixel (B_{offset}), relative to the stamp origin, measured in pixels. The red sub-pixel always has an offset(u,v) of (0,0).

Figure 2 displays the corresponding information for one stamp that is a bit more complex (identified as 'OLED3'). This stamp is composed of four pixels and comprises two different pixel types. The sub-pixels in the left top pixel (pixel coordinate (0,0)) and right bottom pixel (pixel coordinate (1,1)) have a first sub-pixel lay-out; the sub-pixels in the right top pixel (pixel coordinate (1,0)) and left bottom pixel (pixel coordinate (1,1)) have a second sub-pixel lay-out. The three tables below the stamps provide the offset for each of the four red sub-pixels (R_{offset}), each of the four green sub-pixels (G_{offset}), and each of the four blue sub-pixels (B_{offset}), relative to the stamp origin, measured in pixels. The positions of the four entries in each table correspond to the position of the pixels in the stamp.

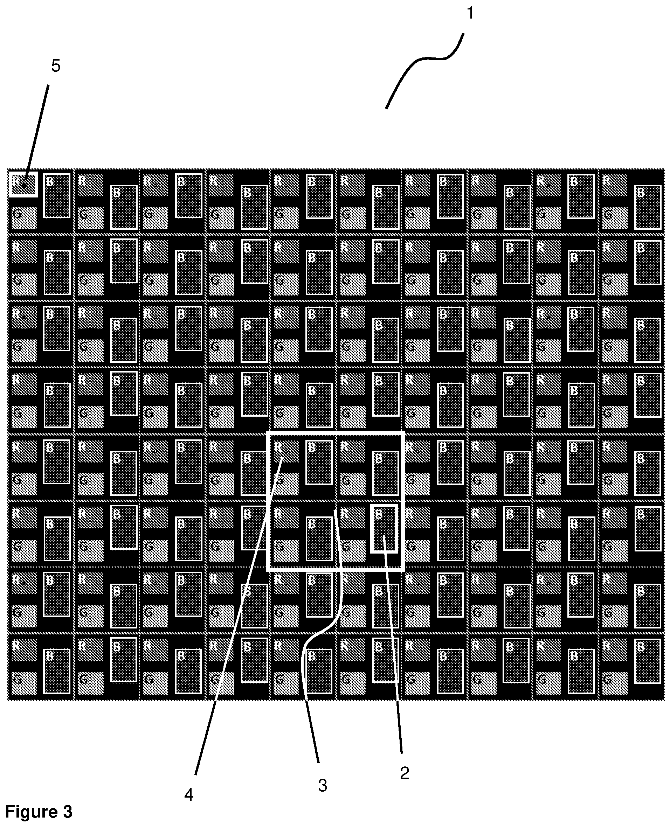

Figure 3 displays a pixel arrangement (1) that is composed of the two different pixel types of Figure 2. It comprises a target sub-pixel (2) in a stamp (3). This stamp (3) comprises four pixels - each of the two different pixel types occurs twice in the stamp (3), as is explained hereabove for Figure 2. A stamp origin (4) is present in the stamp (3) and a pixel arrangement origin (5) is present in the pixel arrangement (1).

The target stamp offset for the stamp origin (4) relative to the pixel arrangement origin (5) is (4 , 4), measured in pixels along a row and a column of the pixel arrangement (1) in Figure 3. The sub-pixel offset for the target sub-pixel (2) relative to the stamp origin (4) is (9/6 , 7/6), as can be seen in the table of Figure 2. The position of the target sub-pixel (2) in the pixel arrangement (1), expressed in pixels, is (4 , 4) + (9/6 , 7/6) = (33/6 , 31/6).

## Claims

1. Method for displaying a first content and a second content on a display device that is capable of directing the first content and the second content in mutually different spatial directions, the method comprising the steps of
a) providing the display device, wherein the display device comprises a panel for directing the first content and the second content in mutually different spatial directions by means of a view-forming arrangement,
- wherein the panel comprises a pixel arrangement that is composed of a plurality of pixels that are capable of producing a pixel output, the panel comprising the view-forming arrangement wherein the view-forming arrangement is provided over the pixel arrangement;
- wherein the pixels are composed of a plurality of sub-pixels that are capable of producing a sub-pixel output; and
- wherein the pixel arrangement comprises at least a first pixel type having a first sub-pixel lay-out;
b) providing the first content and the second content;
c) providing the mutually different spatial directions to which the first content and the second content have to be directed;
d) defining a stamp, the stamp being a repeating unit in the pixel arrangement, comprising at least one or more pixels of the first pixel type; wherein a plurality of the stamps are arranged in a stamp grid overlaying the pixel arrangement, in a direction along rows of the stamp grid and a direction along columns of the stamp grid;
e) setting one particular sub-pixel in the stamp as an origin of the stamp, to define a stamp origin;
f) setting one particular sub-pixel in the pixel arrangement as an origin of the pixel arrangement, to define a pixel arrangement origin;
g) identifying a target sub-pixel of which the position in the pixel arrangement needs to be determined;
h) determining the stamp to which the target sub-pixel belongs, to define such stamp as a target stamp;
i) determining a target stamp offset for the stamp origin of the target stamp relative to the pixel arrangement origin;
j) determining a sub-pixel offset for the target sub-pixel relative to the stamp origin of the target stamp, using a look-up table that is drawn up for the stamp and that contains the relative positions of all sub-pixels of the stamp relative to the stamp origin;
k) determining a total sub-pixel offset for the target sub-pixel relative to the pixel arrangement origin by adding the sub-pixel offset to the target stamp offset;
l) determining for the target sub-pixel whether it produces sub-pixel output for the first content or for the second content, taking into account
- the view-forming arrangement;
- the mutually different spatial directions as provided under c);
- the total sub-pixel offset of the target sub-pixel as determined under k);
m) controlling the target sub-pixel accordingly.

2. Method according to claim 1, which is followed by repeating steps g) to m) a plurality of times, each time for a different target sub-pixel.

3. Method according to claim 1 or 2, wherein the pixels in the pixel arrangement are arrayed in a direction along a row and a direction along a column.

4. Method according to any one of claims 1-3, wherein the panel is an OLED panel.

5. Method according to any one of claims 1-4, wherein the pixels in the pixel arrangement comprise one red sub-pixel, one green sub-pixel and one blue sub-pixel, wherein the blue sub-pixel comprises multiple discontinuous light emitting spots.

6. Method according to any one of claims 1-5, wherein the method is repeated at a frequency of at least 50 times per second, preferably at a frequency in the range of 55-150 times per second.

7. Method according to any one of claims 1-6, wherein the sub-pixel that is set as the pixel arrangement origin in step d) coincides with the sub-pixel that is set as the stamp origin of the stamp in step c).

8. Method according to any one of claims 1-7, wherein the pixel arrangement comprises a second pixel type having a second sub-pixel lay-out that is different from the first sub-pixel lay-out; and wherein the stamp further comprises one or more pixels of the second pixel type.

9. Method according to claim 8, wherein the pixel arrangement comprises a third pixel type having a third sub-pixel lay-out that is different from the first sub-pixel lay-out and different from the second sub-pixel lay-out; and wherein the stamp further comprises one or more pixels of the third pixel type.

10. Method according to any one of claims 1-9, wherein, for the purpose of determining a target stamp offset, a sub-pixel offset and a total sub-pixel offset, a pixel is represented by its center of gravity.

11. Method according to any one of claims 1-10, wherein the display device is a multi-viewer display device and/or an autostereoscopic display device; in particular wherein the view-forming arrangement comprises a lenticular lens, a parallax barrier or an arrangement that is based on the principle of directional backlight.

12. Display device for displaying a first content and a second content, wherein the first content and the second content are directed in mutually different spatial directions, comprising
- a panel comprising
∘ a pixel arrangement that is composed of a plurality of pixels that are capable of producing a pixel output,
∘ a view-forming arrangement for directing the first content and the second content in mutually different spatial directions, wherein the view-forming arrangement is provided over the pixel arrangement;
wherein the pixels are composed of a plurality of sub-pixels that are capable of producing a sub-pixel output, and wherein the pixel arrangement comprises at least
∘ a first pixel type having a first sub-pixel lay-out; and
∘ optionally a second pixel type having a second sub-pixel lay-out that is different from the first sub-pixel lay-out;
- a processor and a memory, wherein the memory comprises computer-executable code that, when executed by the processor, causes the processor to perform the method according to any one of claims 1-11.

13. Display device according to claim 12, wherein the display device is a multi-viewer display device and/or an autostereoscopic display device; in particular wherein the view-forming arrangement comprises a lenticular lens, a parallax barrier or an arrangement that is based on the principle of directional backlight.

14. A computer readable medium comprising transitory or non-transitory data representing instructions to cause the processor of the display device according to claim 12 to perform the method according to any one of claims 1-11.

15. Software arranged to perform the method according to any one of claims 1-11 when executed on the processor of the display device according to claim 12.

## Patentansprüche

1. Verfahren zum Anzeigen eines ersten Inhalts und eines zweiten Inhalts auf einer Anzeigevorrichtung, die in der Lage ist, den ersten Inhalt und den zweiten Inhalt in voneinander verschiedene räumliche Richtungen zu lenken, wobei das Verfahren die folgenden Schritte umfasst:
a) Bereitstellen der Anzeigevorrichtung, wobei die Anzeigevorrichtung ein Panel zum Lenken des ersten Inhalts und des zweiten Inhalts in voneinander verschiedene räumliche Richtungen mittels einer ansichtsbildenden Anordnung umfasst,
- wobei das Panel eine Pixelanordnung umfasst, die aus mehreren Pixeln zusammengesetzt ist, die in der Lage sind, eine Pixelausgabe zu erzeugen, wobei das Panel die ansichtsbildende Anordnung umfasst, wobei die ansichtsbildende Anordnung über der Pixelanordnung bereitgestellt ist;
- wobei die Pixel aus mehreren Subpixeln zusammengesetzt sind, die in der Lage sind, eine Subpixelausgabe zu erzeugen; und
- wobei die Pixelanordnung mindestens einen ersten Pixeltyp mit einem ersten Subpixellayout umfasst;
b) Bereitstellen des ersten Inhalts und des zweiten Inhalts;
c) Bereitstellen der voneinander verschiedenen räumlichen Richtungen, auf die der erste Inhalt und der zweite Inhalt gelenkt werden müssen;
d) Definieren eines Stempels, wobei der Stempel eine Wiederholungseinheit in der Pixelanordnung ist, die mindestens ein oder mehrere Pixel des ersten Pixeltyps umfasst;
wobei mehrere der Stempel in einem Stempelgitter, das die Pixelanordnung überlagert, in einer Richtung entlang Zeilen des Stempelgitters und einer Richtung entlang Spalten des Stempelgitters angeordnet sind;
e) Festlegen eines bestimmten Subpixels in dem Stempel als Ursprung des Stempels, um einen Stempelursprung zu definieren;
f) Festlegen eines bestimmten Subpixels in der Pixelanordnung als einen Ursprung der Pixelanordnung, um einen Pixelanordnungsursprung zu definieren;
g) Identifizieren eines Zielsubpixels, dessen Position in der Pixelanordnung bestimmt werden muss;
h) Bestimmen des Stempels, zu dem das Zielsubpixel gehört, um einen solchen Stempel als einen Zielstempel zu definieren;
i) Bestimmen eines Zielstempelversatzes für den Stempelursprung des Zielstempels relativ zu dem Pixelanordnungsursprung;
j) Bestimmen eines Subpixelversatzes für das Zielsubpixel relativ zu dem Stempelursprung des Zielstempels unter Verwendung einer Nachschlagetabelle, die für den Stempel erstellt wird und die die relativen Positionen aller Subpixel des Stempels relativ zu dem Stempelursprung enthält;
k) Bestimmen eines Gesamtsubpixelversatzes für das Zielsubpixel relativ zu dem Pixelanordnungsursprung durch Addieren des Subpixelversatzes zu dem Zielstempelversatz;
l) Bestimmen für das Zielsubpixel, ob es eine Subpixelausgabe für den ersten Inhalt oder für den zweiten Inhalt erzeugt, unter Berücksichtigung
- der ansichtsbildenden Anordnung;
- der voneinander verschiedenen räumlichen Richtungen, wie unter c) bereitgestellt;
- des Gesamtsubpixelversatzes des Zielsubpixels, wie unter k) bestimmt;
m) entsprechendes Steuern des Zielsubpixels.

2. Verfahren nach Anspruch 1, dem mehrere Wiederholungen der Schritte g) bis m) jeweils für ein anderes Zielsubpixel folgen.

3. Verfahren nach Anspruch 1 oder 2, wobei die Pixel in der Pixelanordnung in einer Richtung entlang einer Zeile und einer Richtung entlang einer Spalte in einem Array angeordnet sind.

4. Verfahren nach einem der Ansprüche 1-3, wobei das Panel ein OLED-Panel ist.

5. Verfahren nach einem der Ansprüche 1-4, wobei die Pixel in der Pixelanordnung ein rotes Subpixel, ein grünes Subpixel und ein blaues Subpixel umfassen, wobei das blaue Subpixel mehrere diskontinuierliche Lichtemissionspunkte umfasst.

6. Verfahren nach einem der Ansprüche 1-5, wobei das Verfahren mit einer Frequenz von mindestens 50 mal pro Sekunde, vorzugsweise mit einer Frequenz im Bereich von 55-150 mal pro Sekunde, wiederholt wird.

7. Verfahren nach einem der Ansprüche 1-6, wobei das Subpixel, das in Schritt d) als der Pixelanordnungsursprung festgelegt wird, mit dem Subpixel zusammenfällt, das in Schritt c) als der Stempelursprung des Stempels festgelegt wird.

8. Verfahren nach einem der Ansprüche 1-7, wobei die Pixelanordnung einen zweiten Pixeltyp mit einem zweiten Subpixellayout umfasst, das sich von dem ersten Subpixellayout unterscheidet; und wobei der Stempel ferner ein oder mehrere Pixel des zweiten Pixeltyps umfasst.

9. Verfahren nach Anspruch 8, wobei die Pixelanordnung einen dritten Pixeltyp mit einem dritten Subpixellayout umfasst, das sich von dem ersten Subpixellayout unterscheidet und sich von dem zweiten Subpixellayout unterscheidet; und wobei der Stempel ferner ein oder mehrere Pixel des dritten Pixeltyps umfasst.

10. Verfahren nach einem der Ansprüche 1-9, wobei zum Bestimmen eines Zielstempelversatzes, eines Subpixelversatzes und eines Gesamtsubpixelversatzes ein Pixel durch seinen Schwerpunkt repräsentiert wird.

11. Verfahren nach einem der Ansprüche 1-10, wobei die Anzeigevorrichtung eine Multi-Viewer-Anzeigevorrichtung und/oder eine autostereoskopische Anzeigevorrichtung ist; insbesondere wobei die ansichtsbildende Anordnung eine Lentikularlinse, eine Parallaxenbarriere oder eine Anordnung umfasst, die auf dem Prinzip der gerichteten Hintergrundbeleuchtung basiert.

12. Anzeigevorrichtung zum Anzeigen eines ersten Inhalts und eines zweiten Inhalts, wobei der erste Inhalt und der zweite Inhalt in voneinander verschiedene räumliche Richtungen gelenkt sind, umfassend
- ein Panel, das Folgendes umfasst:
∘ eine Pixelanordnung, die aus mehreren Pixeln zusammengesetzt ist, die in der Lage sind, eine Pixelausgabe zu erzeugen,
∘ eine ansichtsbildende Anordnung zum Lenken des ersten Inhalts und des zweiten Inhalts in voneinander verschiedene räumliche Richtungen, wobei die ansichtsbildende Anordnung über der Pixelanordnung bereitgestellt ist;
wobei die Pixel aus mehreren Subpixeln zusammengesetzt sind, die in der Lage sind, eine Subpixelausgabe zu erzeugen, und wobei die Pixelanordnung mindestens Folgendes umfasst:
∘ einen ersten Pixeltyp mit einem ersten Subpixellayout; und
∘ optional einen zweiten Pixeltyp mit einem zweiten Subpixellayout, das sich von dem ersten Subpixellayout unterscheidet;
- einen Prozessor und einen Speicher, wobei der Speicher computerausführbaren Code umfasst, der, wenn er von dem Prozessor ausgeführt wird, den Prozessor veranlasst, das Verfahren nach einem der Ansprüche 1-11 durchzuführen.

13. Anzeigevorrichtung nach Anspruch 12, wobei die Anzeigevorrichtung eine Multi-Viewer-Anzeigevorrichtung und/oder eine autostereoskopische Anzeigevorrichtung ist; insbesondere wobei die ansichtsbildende Anordnung eine Lentikularlinse, eine Parallaxenbarriere oder eine Anordnung umfasst, die auf dem Prinzip der gerichteten Hintergrundbeleuchtung basiert.

14. Computerlesbares Medium, das flüchtige oder nichtflüchtige Daten umfasst, die Anweisungen repräsentieren, um zu bewirken, dass der Prozessor der Anzeigevorrichtung nach Anspruch 12 das Verfahren nach einem der Ansprüche 1-11 durchführt.

15. Software, die dazu eingerichtet ist, das Verfahren nach einem der Ansprüche 1-11 durchzuführen, wenn sie auf dem Prozessor der Anzeigevorrichtung nach Anspruch 12 ausgeführt wird.

## Revendications

1. Procédé d'affichage d'un premier contenu et d'un deuxième contenu sur un dispositif d'affichage apte à diriger le premier contenu et le deuxième contenu dans des directions spatiales mutuellement différentes, le procédé comprenant les étapes suivantes :
a) fourniture du dispositif d'affichage, le dispositif d'affichage comprenant un panneau destiné à diriger le premier contenu et le deuxième contenu dans des directions spatiales mutuellement différentes au moyen d'un agencement de formation de vues,
- le panneau comprenant un agencement de pixels composé d'une pluralité de pixels aptes à produire une sortie de pixel, le panneau comprenant l'agencement de formation de vues, l'agencement de formation de vues étant disposé par-dessus l'agencement de pixels ;
- les pixels étant composés d'une pluralité de sous-pixels aptes à produire une sortie de sous-pixel ; et
- l'agencement de pixels comprenant au moins un premier type de pixel présentant une première disposition de sous-pixels ;
b) fourniture du premier contenu et du deuxième contenu ;
c) fourniture des directions spatiales mutuellement différentes dans lesquelles le premier contenu et le deuxième contenu doivent être dirigés ;
d) définition d'un motif, le motif étant une unité répétitive dans l'agencement de pixels, comprenant au moins un ou plusieurs pixels du premier type de pixel ;
une pluralité des motifs étant agencés dans une grille de motifs se superposant à l'agencement de pixels, dans une direction suivant des lignes de la grille de motifs et une direction suivant des colonnes de la grille de motifs ;
e) définition d'un sous-pixel particulier dans le motif comme origine du motif, afin de définir une origine de motif ;
f) définition d'un sous-pixel particulier dans l'agencement de pixels comme origine de l'agencement de pixels, afin de définir une origine d'agencement de pixels ;
g) identification d'un sous-pixel cible dont la position dans l'agencement de pixels doit être déterminée ;
h) détermination du motif auquel appartient le sous-pixel cible, afin de définir ce motif comme motif cible ;
i) détermination d'un décalage de motif cible pour l'origine de motif du motif cible par rapport à l'origine d'agencement de pixels ;
j) détermination d'un décalage de sous-pixel pour le sous-pixel cible par rapport à l'origine de motif du motif cible, à l'aide d'une table de correspondance qui est établie pour le motif et qui contient les positions relatives de tous les sous-pixels du motif par rapport à l'origine de motif ;
k) détermination d'un décalage total de sous-pixel pour le sous-pixel cible par rapport à l'origine d'agencement de pixels par addition du décalage de sous-pixel au décalage de motif cible ;
l) détermination, pour le sous-pixel cible, de s'il produit une sortie de sous-pixel pour le premier contenu ou pour le deuxième contenu, compte tenu des éléments suivants :
- l'agencement de formation de vues ;
- les directions spatiales mutuellement différentes telles que fournies à l'étape c) ;
- le décalage total de sous-pixel du sous-pixel cible tel que déterminé à l'étape k) ;
m) commande du sous-pixel cible en conséquence.

2. Procédé selon la revendication 1, qui est suivi d'une répétition des étapes g) à m) plusieurs fois, chaque fois pour un sous-pixel cible différent.

3. Procédé selon la revendication 1 ou 2, dans lequel les pixels dans l'agencement de pixels sont disposés en matrice dans une direction suivant une ligne et dans une direction suivant une colonne.

4. Procédé selon l'une quelconque des revendications 1 à 3, dans lequel le panneau est un panneau OLED.

5. Procédé selon l'une quelconque des revendications 1 à 4, dans lequel les pixels dans l'agencement de pixels comprennent un sous-pixel rouge, un sous-pixel vert et un sous-pixel bleu, le sous-pixel bleu comprenant de multiples taches émettrices de lumière discontinues.

6. Procédé selon l'une quelconque des revendications 1 à 5, le procédé étant répété à une fréquence d'au moins 50 fois par seconde, de préférence à une fréquence dans la plage de 55 à 150 fois par seconde.

7. Procédé selon l'une quelconque des revendications 1 à 6, dans lequel le sous-pixel qui est défini comme origine d'agencement de pixels à l'étape d) coïncide avec le sous-pixel qui est défini comme origine de motif du motif à l'étape c).

8. Procédé selon l'une quelconque des revendications 1 à 7, dans lequel l'agencement de pixels comprend un deuxième type de pixel présentant une deuxième disposition de sous-pixels différente de la première disposition de sous-pixels ; et dans lequel le motif comprend en outre un ou plusieurs pixels du deuxième type de pixel.

9. Procédé selon la revendication 8, dans lequel l'agencement de pixels comprend un troisième type de pixel présentant une troisième disposition de sous-pixels différente de la première disposition de sous-pixels et différente de la deuxième disposition de sous-pixels ; et dans lequel le motif comprend en outre un ou plusieurs pixels du troisième type de pixel.

10. Procédé selon l'une quelconque des revendications 1 à 9, dans lequel, aux fins de la détermination d'un décalage de motif cible, d'un décalage de sous-pixel et d'un décalage total de sous-pixel, un pixel est représenté par son centre de gravité.

11. Procédé selon l'une quelconque des revendications 1 à 10, dans lequel le dispositif d'affichage est un dispositif d'affichage à observateurs multiples et/ou un dispositif d'affichage autostéréoscopique ; en particulier, dans lequel l'agencement de formation de vues comprend une lentille lenticulaire, une barrière de parallaxe ou un agencement qui est basé sur le principe du rétroéclairage directionnel.

12. Dispositif d'affichage destiné à afficher un premier contenu et un deuxième contenu, le premier contenu et le deuxième contenu étant dirigés dans des directions spatiales mutuellement différentes, comprenant
- un panneau comprenant
∘ un agencement de pixels composé d'une pluralité de pixels aptes à produire une sortie de pixel,
∘ un agencement de formation de vues destiné à diriger le premier contenu et le deuxième contenu dans des directions spatiales mutuellement différentes, l'agencement de formation de vues étant disposé par-dessus l'agencement de pixels ;
les pixels étant composés d'une pluralité de sous-pixels aptes à produire une sortie de sous-pixel, et l'agencement de pixels comprenant au moins
∘ un premier type de pixel présentant une première disposition de sous-pixels ; et
∘ facultativement, un deuxième type de pixel présentant une deuxième disposition de sous-pixels différente de la première disposition de sous-pixels ;
- un processeur et une mémoire, la mémoire comprenant un code exécutable par ordinateur qui, lorsqu'il est exécuté par le processeur, amène le processeur à réaliser le procédé selon l'une quelconque des revendications 1 à 11.

13. Dispositif d'affichage selon la revendication 12, le dispositif d'affichage étant un dispositif d'affichage à observateurs multiples et/ou un dispositif d'affichage autostéréoscopique ; en particulier, dans lequel l'agencement de formation de vues comprend une lentille lenticulaire, une barrière de parallaxe ou un agencement qui est basé sur le principe du rétroéclairage directionnel.

14. Support lisible par ordinateur comprenant des données transitoires ou non transitoires représentant des instructions pour amener le processeur du dispositif d'affichage selon la revendication 12 à réaliser le procédé selon l'une quelconque des revendications 1 à 11.

15. Logiciel agencé pour réaliser le procédé selon l'une quelconque des revendications 1 à 11 lorsqu'il est exécuté sur le processeur du dispositif d'affichage selon la revendication 12.
